Europäisches Patentamt

European Patent Office

Office européen des brevets

(19)

(11) Veröffentlichungsnummer: **0 329 831 B1**

# (12) EUROPÄISCHE PATENTSCHRIFT

(45) Veröffentlichungstag der Patentschrift :
10.07.91 Patentblatt 91/28

(51) Int. Cl.$^5$ : **F16D 65/12, F16D 65/847, F16D 55/224**

(21) Anmeldenummer : 88118776.9

(22) Anmeldetag : 11.11.88

(54) Scheibenbremse für ein Kraftfahrzeug.

(30) Priorität : 25.02.88 DE 3805994

(43) Veröffentlichungstag der Anmeldung :
30.08.89 Patentblatt 89/35

(45) Bekanntmachung des Hinweises auf die
Patenterteilung :
10.07.91 Patentblatt 91/28

(84) Benannte Vertragsstaaten :
DE ES FR GB IT SE

(56) Entgegenhaltungen :
DE-A- 2 739 477
DE-B- 1 950 178

(56) Entgegenhaltungen :
DE-U- 8 709 406
US-A- 3 273 675
US-A- 4 460 069
PATENT ABSTRACTS OF JAPAN, Band 1, Nr.
154, 9. Dezember 1977, Seite 5680 M 77
IDEM

(73) Patentinhaber : Bayerische Motoren Werke
Aktiengesellschaft
Patentabteilung AJ-30 Postfach 40 02 40
Petuelring 130
W-8000 München 40 (DE)

(72) Erfinder : Egartner, Walter
Nadistrasse 8
W-8000 München 40 (DE)

**Beschreibung**

Die Erfindung bezieht sich auf eine Scheibenbremse der im Oberbegriff des Patentanspruchs 1 genannten und aus der JP-A-52 100 056 hervorgehenden Art.

Bei der in dieser Druckschrift offenbarten Scheibenbremse ist der Außendurchmesser der kreisringförmigen inneren Reibfläche der Bremsscheibe wesentlich größer bemessen als der Außendurchmesser der äußeren kreisringförmigen Reibfläche. Dabei erstreckt sich der außenliegende Umfangsrand des innenliegenden Bremsbelags erheblich radial über den benachbarten Umfangsrand des außenliegenden Bremsbelags hinaus. Dies hat den Nachteil, daß die Bremsscheibe – insbesondere bei sehr starker Erhitzung und bei gleichzeitiger starker Beaufschlagung der Reibflächen durch die Bremsbeläge – derart an ihrem außenliegenden Randbereich verformt werden kann, daß dieser geringfügig schräg zum außenliegenden Bremsbelag hin verläuft, so daß die Bremsscheibe die Form einer flachen Tellerfeder aufweist.

Aufgabe der Erfindung ist es daher, bei einer Scheibenbremse der im Oberbegriff des Patentanspruchs 1 genannten Art die Bremsscheibe mit einfachen und kostengünstig durchführbaren Mitteln derart auszubilden, daß ein schräg verlaufendes Verformen ihres außenliegenden Randbereichs vermieden wird, aber dennoch der Bremsträger nahe am Übergangsbereich von Felgenbett und Radscheibe und damit tief in der Felgenschüssel angeordnet werden kann.

Zur Lösung der Aufgabe sind die im kennzeichnenden Teil des Patentanspruchs 1 dargelegten Merkmale vorgesehen.

Da die beiden Reibflächen erfindungsgemäß einen gleichgroßen mittleren Durchmesser haben – wobei der Innendurchmesser der äußeren Reibfläche größer ist als der Innendurchmesser der inneren Reibfläche – und dabei die Bremsbeläge bei Beaufschlagung der kreisringförmigen Reibflächen genau gegenüberliegen, wird der außenliegende Randbereich der Bremsscheibe auch bei deren sehr starken Erhitzung nicht verformt.

Nachdem die äußere kreisringförmige Reibfläche eine kleinere Ringbreite hat als die innere Reibfläche, ist der gegen die äußere Reibfläche wirkende Bremsbelag in Bezug zum innenliegenden Bremsbelag natürlich schmäler. Zum Ausgleich der unterschiedlichen Bremsbelagabmessungen bzw. des unterschiedlichen Verschleißes am außenliegenden Bremsbelag kann dieser gegenüber dem innenliegenden Bremsbelag einen unterschiedlichen, nämlich üblicherweise höheren Reibbeiwert aufweisen. Dieser kann durch eine entsprechende werkstoffmäßige Zusammensetzung des außenliegenden Bremsbelags erreicht werden (Merkmale des Patentanspruchs 2).

Nach einer Ausführungsart der Erfindung hat die Bremsscheibe eine topfförmige Aufnahme, wobei vom Endabschnitt des Zylindermantels die innere Reibscheibe absteht ; nahe dieser sind am Zylindermantel eine Vielzahl von Luftdurchlaßöffnungen angeordnet. Durch diese werden die Reibscheiben optimal belüftet und es kann auch der Zylindermantel einen etwas größeren Durchmesser aufweisen. Die erläuterte Ausführungsart ist besonders vorteilhaft bei Verwendung von gut belüfteten Rädern, wie zum Beispiel Speichenräder oder dergleichen. Ferner kann hierbei auch der Bremsträger optimal an die Kontur der Felgenschüssel angepaßt werden (Merkmale des Patentanspruchs 3).

Gemäß den Merkmalen des Patentanspruchs 4 besteht schließlich eine weitere Ausführungsart bei einer topfförmigen Aufnahme der Bremsscheibe darin, daß die äußere Reibscheibe vom Endabschnitt des Zylindermantels absteht, der hierdurch erheblich vergrößert werden kann. Damit ergeben sich optimal günstige Einspannmöglichkeiten für die Bremsscheibe, was besonders bei Verwendung von Stahlfelgen vorteilhaft ist. Eine derartige Bremsscheibe kann problemlos auch aus hochgekohltem Grauguß (beispielsweise GG 15) gefertigt werden, wodurch eine hohe thermische Standfestigkeit sowie ein Vermindern des Bremsenrubbelns erreicht wird.

Zwei Ausführungsbeispiele der Erfindung sind in der Zeichnung dargestellt und werden im folgenden erläutert. Es zeigt :

Fig. 1    einen Schnitt einer Felge mit topfförmiger, belüfteter Bremsscheibe und einem Bremsträger,
Fig. 2    eine gegenüber der Ausführungsart nach Fig. 1 abgewandelte Ausführungsform.

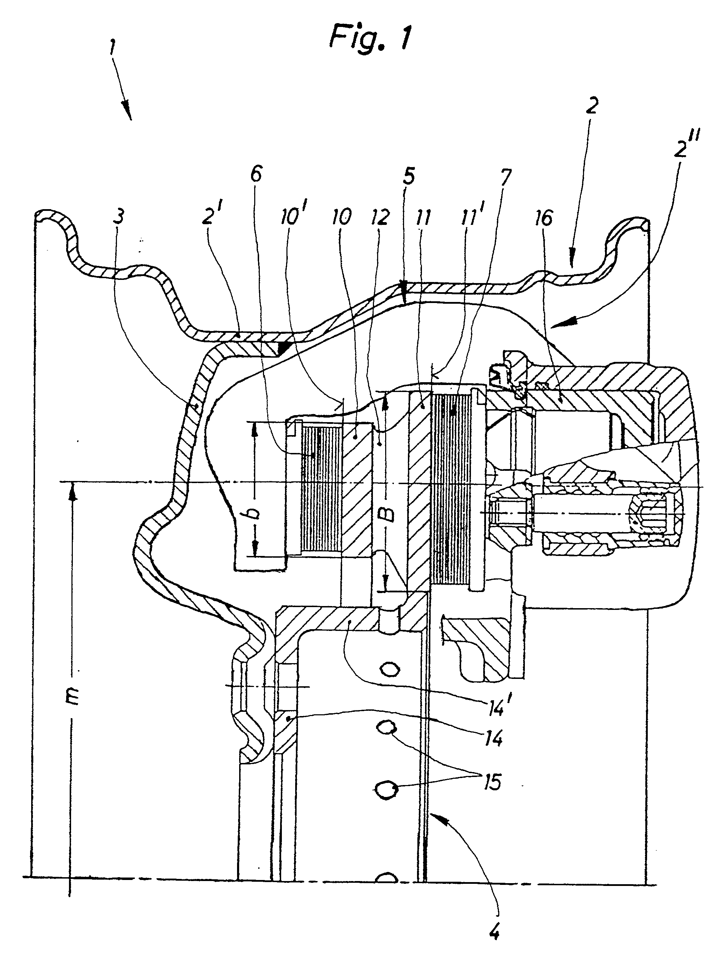

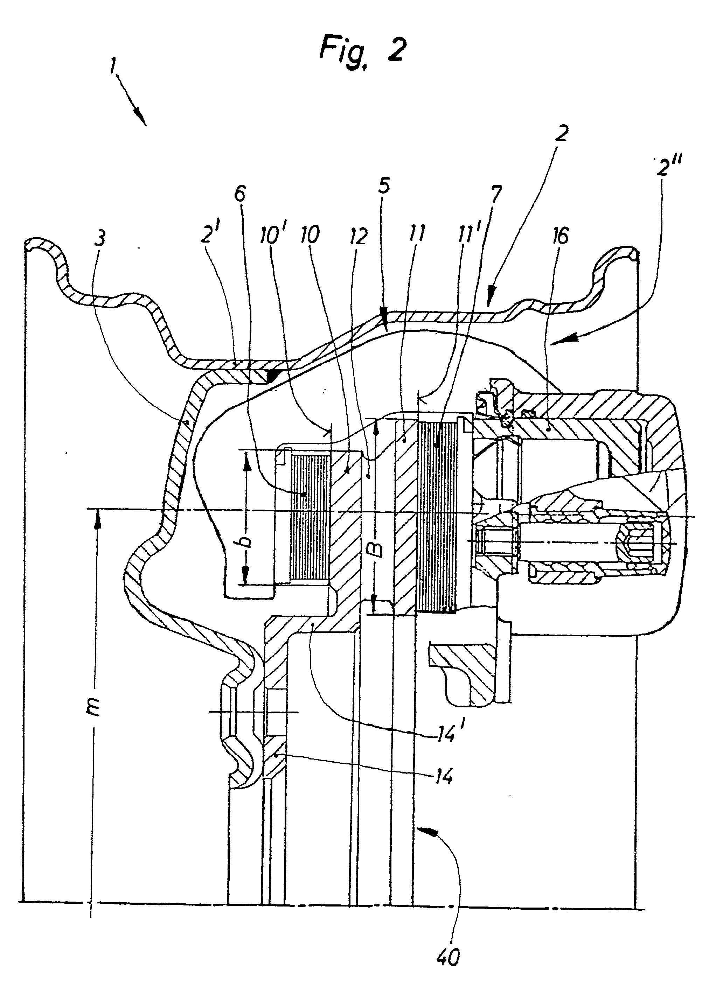

Das in den Fig. 1 und 2 dargestellte Fahrzeugrad 1 eines Personenkraftwagens weist eine Felge 2 auf, in deren Felgenbett 2' eine radial verlaufende Radscheibe 3 unlösbar befestigt ist. Diese ist ihrerseits unter Zwischenlage einer topfförmigen, belüfteten Bremsscheibe 4 (Fig. 1) oder 40 (Fig. 2) an einer nicht dargestellten Achsnabe festgeschraubt. In der von der Radscheibe 3 und vom innenliegenden Abschnitt der Felge 2 begrenzten Felgenschüssel 2" ist ferner ein an einem achsfesten Teil abgestützten Bremsträger 5 angeordnet, der einen außenliegenden Bremsbelag 6 und einen innenliegenden Bremsbelag 7 trägt, welcher hydraulisch beaufschlagt ist.

Die beiden Bremsscheiben 4 und 40 haben jeweils eine kreisringförmige äußere, der Radscheibe 3 zugewandte Reibscheibe 10 und eine innere Reibscheibe 11, die unter Bildung von radialverlaufenden Kühlluftkanälen über eine Anzahl von Stegen 12 miteinander verbunden sind.

Die mit dem außenliegenden Bremsbelag 6 zusammenwirkende kreisringförmige äußere Reibfläche 10' der äußeren Reibscheibe 10 und die vom innenliegenden Bremsbelag 7 beaufschlagte innere, kreisringförmige Reibfläche 11' der inneren Reibscheibe 11 haben jeweils einen gleichgroßen mittleren Durchmesser m. Bei beiden Bremsscheiben 4 und 40 ist jedoch die Ringbreite b der äußeren Reibfläche 10' kleiner – im Ausführungsbeispiel etwa um ein Drittel – als die Ringbreite B der inneren Reibfläche 11'. Damit ist natürlich der Außendurchmesser der äußeren kreisringförmigen Reibfläche 10' kleiner als der Außendurchmesser der inneren Reibfläche 11', bzw. der Innendurchmesser der äußeren Reibfläche 10' größer als der Innendurchmesser der inneren Reibfläche 11'.

Bei der in Fig. 1 gezeigten Ausführungsart der Bremsscheibe 4 steht die innere Reibscheibe 11 senkrecht vom Endabschnitt eines Zylindermantels 14' der topfförmigen Nabe 14 ab, wobei sich an die innere Reibscheibe 11 über die Stege 12 die äußere Reibscheibe 10 anschließt. Im Mittelbereich der Axialerstreckung der Stege 12 sind hierbei im Zylindermantel 14' eine Vielzahl von Luftdurchlaßöffnungen angeordnet, welche zur Verbesserung der Kühlung der beiden Reibscheiben 10 und 11 bei Entstehen von Bremswärme dienen. Auch kann der Durchmesser des Zylindermantels 14' vergleichsweise größergestaltet werden, so daß die topfförmige Nabe 14 ein größeres Wärmespeichervermögen hat. Die Bremsscheibe 4 ist in besonderer Weise für Speichenräder oder dergleichen geeignet.

Die in Fig. 2 dargestellte Bremsscheibe 40 hat ebenfalls eine topfförmige Nabe 14, von deren Zylindermantel 14' an seinem Endabschnitt die äußere Reibscheibe 10 senkrecht absteht ; an diese schließt sich über die Stege 12 die innere Reibscheibe 11 an. Aufgrund dieser Ausbildung kann der Außendurchmesser des Zylindermantels 14' verhältnismäßig groß – nämlich etwa dem Innendurchmesser der inneren Reibscheibe 11 entsprechend – gestaltet werden, so daß die topfförmige Nabe 14 neben einem guten Wärmespeicherungsvermögen auch sehr gut kraftschlüssig an der Radscheibe 3 festgespannt werden kann, was insbesondere bei Stahlfelgen vorteilhaft ist.

Bei beiden Bremsscheiben 4 und 40 kann die Wanddicke der äußeren Ringscheibe 10 größer sein als die Wanddicke der inneren Reibscheibe 11. Durch diese Maßnahme wird der erhöhte Verschleiß an der äußeren Reibscheibe 10 ausgeglichen und ferner an dieser ein erhöhtes Wärmespeicherungsvermögen erreicht.

Da wie erwähnt der Außendurchmesser der äußeren Reibfläche 10' gegenüber dem Außendurchmesser der inneren Reibfläche 11' wesentlich kleiner ist, ist der Bremsträger 5 im Bereich der äußeren Reibscheibe 10 und des außenliegenden Bremsbelags 6 radial einwärts gerichtet abgestuft ausgebildet, so daß er tiefer in der Felgenschüssel 2" – also näher am Übergangsbereich von Radscheibe 3 und Felgenbett 2' – angeordnet werden kann. Gegenüber Reibscheiben mit gleichgroßen Außendurchmessern läßt sich durch diese Maßnahme der Durchmesser des Fahrzeugrads 1 um etwa einen Zoll verkleinern und dadurch eine Kosten- und Gewichtsverminderung erreichen Ferner ist es bei diversen Achskonstruktionen erforderlich, die Bremsscheibe 4, 40 aus räumlichen oder kinematischen Gründen vergleichsweise tief in der Felgenschüssel 2" anzuordnen, so daß hierbei der Durchmesser des Fahrzeugrads nicht vergrößert zu werden braucht.

Der vom Bremskolben 16 beaufschlagte innenliegende Bremsbelag 7 hat eine etwa quadratische Umrißkontur, während der außenliegende Bremsbelag 6 in bezug zum innenliegenden Bremsbelag 7 schmäler und länger ist. Zweckmäßigerweise sind jedoch die Bremsbeläge 6 und 7 in etwa flächengleich. Ferner kann der außenliegende Bremsbelag 6 gegenüber dem innenliegenden Bremsbelag 7 einen unterschiedlichen Reibbeiwert aufweisen. Dieser ist normalerweise am außenliegenden Bremsbelag 6 höher als am innenliegenden Bremsbelag 7. Ein unterschiedlicher Reibbeiwert – der zum Ausgleich der unterschiedlich großen Abmessungen der Bremsbeläge 6 und 7 und/oder des unterschiedlichen Verschleisses des außenliegenden Bremsbelags 6 dient – wird durch eine entsprechende werkstoffmäßige Zusammensetzung der beiden Bremsbeläge 6 oder 7 erreicht. Deren Umrißkonturen passen sich dabei auch optimal an den Bremsträger 5 an.

## Ansprüche

1. Scheibenbremse für ein Kraftfahrzeug, im wesentlichen bestehend aus einem Bremsträger (5) und einer über eine mittige Aufnahme am Fahrzeugrad (1) befestigten Bremsscheibe (4, 40), gegen deren kreisringförmige äußere und innere Reibfläche (10', 11') jeweils wenigstens ein im Bremsträger (5) abgestützter Bremsbelag (6, 7) wirkt, wobei der Außendurchmesser der äußeren Reibfläche (10') kleiner ist als der Außendurchmesser der inneren Reibfläche (11') dadurch gekennzeichnet, daß der Innendurchmesser der äußeren Reibfläche (10') größer ist als der Innendurchmesser der inneren Reibfläche (11') und daß die beiden Reibflächen (10', 11') einen gleich großen mittleren Durchmesser (m) aufweisen.

2. Scheibenbremse nach Anspruch 1, dadurch gekennzeichnet, daß der außenliegende Bremsbelag (6)

gegenüber dem innenliegenden Bremsbelag (7) einen unterschiedlichen Reibbeiwert aufweist.

3. Scheibenbremse nach Anspruch 1, mit einer topfförmigen belüfteten Bremsscheibe (4, 40) einer äußeren Reibscheibe (10) und einer inneren Reibscheibe (11), wobei beide Reibscheiben (10, 11) über eine Anzahl von Stegen miteinander verbunden sind, dadurch gekennzeichnet, daß die innere Reibscheibe (11) vom Endabschnitt eines Zylindermantels (14') einer topfförmigen Nabe (14) absteht, wobei dieser eine Vielzahl von Luftdurchlaßöffnungen (15) aufweist.

4. Scheibenbremse nach Patentanspruch 3, dadurch gekennzeichnet, daß die äußere Reibscheibe (10) vom Endabschnitt des Zylindermantels (14') der topfförmigen Nabe (14) absteht, dessen Außendurchmesser dabei etwa dem Innendurchmesser der inneren Reibscheibe (11) entspricht.

## Claims

1. A disc brake for a motor vehicle, substantially comprising a brake anchor plate (5) and a brake disc (4, 40) which is secured via a central holder to the vehicle wheel (1) and has annular outer and inner friction surfaces (10', 11') each co-operating with at least one brake lining (6, 7) mounted in the brake anchor plate (5), the outer diameter of the outer friction surface (10') being less than the outer diameter of the inner friction surface (11'), characterised in that the inner diameter of the outer friction surface (10') is greater than the inner diameter of the inner friction surface (11'), and the two friction surfaces (10', 11') have the same central diameter (m).

2. A disc brake according to claim 1, characterised in that the outer brake lining (6) has a different coefficient of friction from the inner brake lining (7).

3. A disc brake according to claim 1 comprising a pot-shaped ventilated brake disc (4, 40), an outer friction disc (10) and an inner friction disc (11), the two friction discs (10, 11) being interconnected by a number of webs, characterised in that the inner friction disc (11) projects from the end portion of a cylindrical jacket (14') of a pot-shaped hub (14), the jacket having a number of air openings (15).

4. A disc brake according to claim 3, characterised in that the outer friction disc (10) projects from the end portion of the cylindrical jacket (14') of the pot-shaped hub (14), the outer diameter of the jacket being approximately equal to the inner diameter of the outer friction disc (11).

## Revendications

1. Freins à disques pour un véhicule automobile, se composant essentiellement d'un étrier de frein (5) et d'un disque de frein (4, 40) fixé sur un récepteur médian sur la roue (1) du véhicule, avec des surfaces de friction extérieure et intérieure (10', 11') en forme de couronne circulaire contre chacune desquelles agit au moins une garniture de frein (6, 7) supportée par l'étrier de frein (5), dans lesquels le diamètre extérieur de la surface de friction extérieure (10') est plus petite que le diamètre extérieur de la surface de friction intérieur (11'), caractérisés en ce que le diamètre intérieur de la surface de friction extérieure (10') est plus grand que le diamètre intérieur de la surface de friction intérieure (11') et en ce que les deux surfaces de friction (10', 11') présentent un diamètre moyen (m) d'égale grandeur.

2. Frein à disque selon la revendication 1, caractérisé en ce que la garniture de frein (6) située à l'extérieur présente un coefficient de frottement différent par rapport à celui de la garniture de frein (7) située à l'intérieur.

3. Frein à disque selon la revendication 1, avec un disque de frein (4, 40) ventilé, en forme de tambour, un disque de friction extérieur (10) et un disque de friction intérieur (11), les deux disques de friction (10, 11) étant reliés par un certain nombre d'entretoises, caractérisé en ce que le disque de friction intérieur (11) fait saillie de la partie terminale d'une enveloppe cylindrique (14') d'un moyeu (14) en forme de tambour, lequel présente un certain nombre de canaux (15) de ventilation.

4. Frein à disque selon la revendication 3, caractérisé en ce que le disque de friction extérieur (10) fait saillie de la partie terminale de l'enveloppe cylindrique (14') du moyeu (14) en forme de tambour, dont le diamètre extérieur correspond sensiblement au diamètre intérieur du disque de friction intérieur (11).

## Fig. 1

# Fig. 2